# EUROPEAN PATENT APPLICATION

(11) **EP 4 750 175 A1**
(43) Date of publication of application: **27.05.2026**
(21) Application number: 24842122.4
(22) Date of filing: 14.06.2024
(51) Int. Cl.: H04W 56/00

(54) **INFORMATION INDICATION METHOD AND APPARATUS, AND READABLE STORAGE MEDIUM**

(30) Priority: 17.07.2023 CN 202310873439
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2024/099103
(87) International publication number: WO 2025/016123

(57) **Abstract**

This disclosure provides an information indication method, an apparatus, and a processor-readable storage medium, relating to the field of communication technologies. The method includes: transmitting, by a first terminal, first indication information to a second terminal through a first interface when a first event occurs on a first target interface; wherein the first indication information is used to indicate suspending or releasing a target object on a second target interface. The first interface is a sidelink interface between the first terminal and the second terminal, and the second terminal comprises one or more terminals associated with the first terminal.

## Description

### CROSS-REFERENCE TO RELATED APPLICATIONS

This application claims priority to Chinese Patent Application No. 202310873439.4, filed with the China National Intellectual Property Administration on July 17, 2023, titled "An Information Indication Method, Apparatus, and Computer-Readable Storage Medium" , the entire contents of which are incorporated herein by reference.

### TECHNICAL FIELD

The present disclosure relates to the field of communication technologies, and in particular to an information indication method, an apparatus, and a computer-readable storage medium.

### BACKGROUND

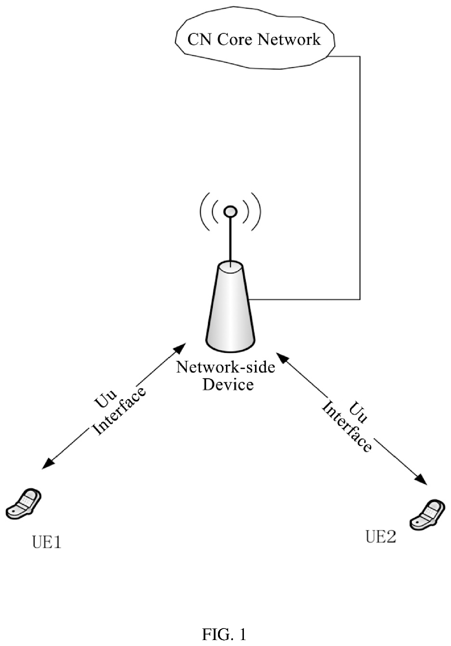

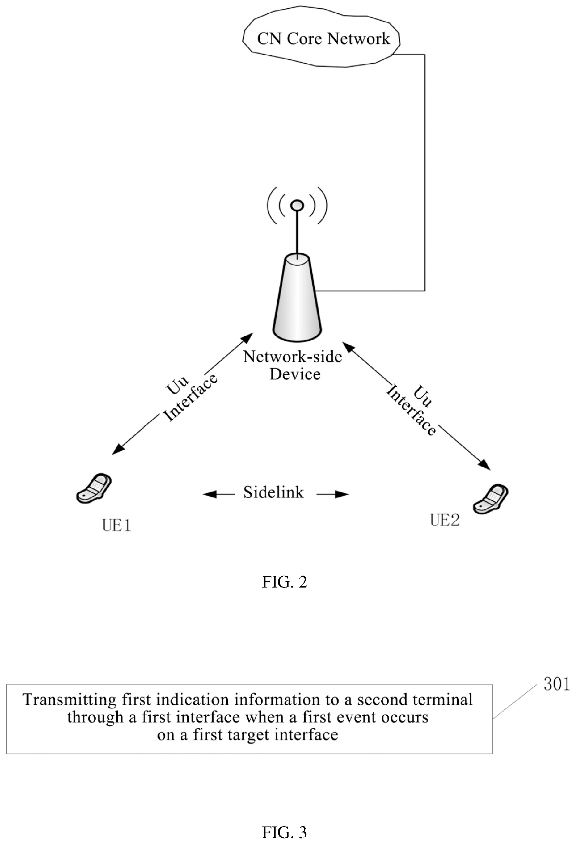

As shown in FIG. 1, traditional wireless communication adopts a cellular communication manner, that is, an uplink and downlink transmission of data and control information is performed between a terminal and a network-side apparatus through a Uu interface. As shown in FIG. 2, direct communication refers to a manner in which adjacent terminals can perform data transmission within a short range through a direct communication link, also referred to as a sidelink, a bypass link, or a PC5 link. A wireless interface corresponding to the sidelink is referred to as a direct communication interface, also referred to as a bypass interface, a sidelink interface, or a PC5 interface.

**In** related technologies, extended reality (XR) services are introduced, including augmented reality (AR), virtual reality (VR), mixed reality (MR), and other types. XR services support multimodality, and under multimodality, one user terminal or multiple user terminals can simultaneously transmit different quality-of-service flows (QoS flows) of a same service.

In related technologies, radio link failures (RLFs) of different terminals are independent of each other. However, in a multimodal XR service transmission scenario, if multiple terminals transmit different QoS flows of a same XR service, when one terminal experiences an RLF, how to avoid desynchronization of multimodal service transmission becomes a problem that needs to be considered.

### SUMMARY

Embodiments of the present disclosure provide an information indication method, an apparatus, and a computer-readable storage medium, so as to ensure transmission synchronization among multiple different target objects corresponding to multimodal services.

In a first aspect, embodiments of the present disclosure provide an information indication method, which is applied to a first terminal, and includes:

in a case that a first event occurs on a first target interface, transmitting, through a first interface, first indication information to a second terminal;

wherein the first indication information is used to indicate suspending a target object or releasing the target object on a second target interface, the first interface is a sidelink interface between the first terminal and the second terminal, and the second terminal includes one or more terminals having an association relationship with the first terminal.

In some embodiments, the first event includes one or more of the following:
RLF;
RLF recovery failure;
RRC connection re-establishment failure;
radio resource control (RRC) reconfiguration failure.

In some embodiments, the first indication information includes one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface includes one or more of the following:
Uu interface;
sidelink interface.

In some embodiments, the target object includes one or more of the following:
a Uu interface bearer and/or logical channel;
a sidelink interface bearer and/or logical channel.

In some embodiments, transmitting the first indication information to the second terminal through the first interface includes:
if it is determined that the second terminal exists, transmitting the first indication information to the second terminal through the first interface.

In some embodiments, the method further includes:
determining the second terminal according to one or more of the following information:
first configuration information sent by a network apparatus;
second configuration information sent by an upper layer of the first terminal.

In some embodiments, the first configuration information or the second configuration information includes one or more of the following:
service identification information;
identification information of the second terminal;
a sidelink target layer 2 (L2) identity associated with the service.

In some embodiments, the method further includes:
if RLF recovery is successful or RRC reconfiguration is successful on the first target interface, transmitting second indication information to the second terminal through the first interface.

In some embodiments, the second indication information includes one or more of the following:
fourth information, used to indicate that RLF recovery is successful or RRC connection re-establishment is successful or RRC reconfiguration is successful;
an identity of the interface on which RLF recovery or RRC connection reestablishment or RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the first indication information and/or the second indication information is transmitted through one or more of the following manners:
broadcast, multicast, unicast.

In a second aspect, embodiments of the present disclosure provide an information indication method, which is applied to a second terminal, and includes:
receiving first indication information sent by a first terminal through a first interface, wherein the first indication information is transmitted in a case that a first event occurs on a first target interface and is used to indicate suspending a target object or releasing the target object on a second target interface, the first interface is a sidelink interface between the first terminal and the second terminal, and the second terminal includes one or more terminals having an association relationship with the first terminal;
suspending the target object on the second target interface or releasing the target object according to the first indication information.

In some embodiments, the first event includes one or more of the following:
RLF;
RLF recovery failure;
RRC connection re-establishment failure;
RRC reconfiguration failure.

In some embodiments, the first indication information includes one or more of the following:
first information, used to indicate the first event;
a first target interface corresponding to the first event;
service identification information.
second information, used to indicate information of an operation to be performed by the second terminal on the second target interface;
third information, used to indicate a target object corresponding to the operation to be performed by the second terminal on the second target interface.

In some embodiments, the first target interface or the second target interface includes one or more of the following:
Uu interface;
sidelink interface.

In some embodiments, the target object includes one or more of the following:
a Uu interface bearer and/or logical channel;
a sidelink interface bearer and/or logical channel.

In some embodiments, suspending the target object on the second target interface or releasing the target object according to the first indication information includes:
suspending or releasing the target object on the second target interface according to the second information and/or the third information.

In some embodiments, the method further includes:
receiving second indication information sent by the first terminal through the first interface.

In some embodiments, the second indication information includes one or more of the following:
fourth information, used to indicate that RLF recovery is successful or RRC connection re-establishment is successful or RRC reconfiguration is successful;
an interface identity of an interface on which RLF recovery or RRC connection re-establishment or RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the method further includes:
resuming data transmission of the target object on the second target interface according to the fifth information and/or the sixth information.

In a third aspect, embodiments of the present disclosure provide an information indication apparatus, which is applied to a first terminal, and includes: a memory, a transceiver, and a processor:
the memory, configured to store a computer program; the transceiver, configured to transmit and receive data under control of the processor; the processor, configured to read the computer program from the memory and perform the following operations:
in a case that a first event occurs on a first target interface, transmitting first indication information to a second terminal through a first interface;
wherein the first indication information is used to indicate suspending a target object or releasing the target object on a second target interface, the first interface is a sidelink interface between the first terminal and the second terminal, and the second terminal includes one or more terminals having an association relationship with the first terminal.

In some embodiments, the first event includes one or more of the following:
RLF;
RLF recovery failure;
RRC connection re-establishment failure;
RRC reconfiguration failure.

In some embodiments, the first indication information includes one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface includes one or more of the following:
Uu interface;
sidelink interface.

In some embodiments, the target object includes one or more of the following:
a Uu interface bearer and/or logical channel;
a sidelink interface bearer and/or logical channel.

In some embodiments, the processor is further configured to read the computer program from the memory and perform the following operations:
if it is determined that the second terminal exists, transmitting the first indication information to the second terminal through the first interface.

In some embodiments, the processor is further configured to read the computer program from the memory and perform the following operations:
determining the second terminal according to one or more of the following information:
first configuration information sent by a network apparatus;
second configuration information sent by an upper layer of the first terminal.

In some embodiments, the first configuration information or the second configuration information includes one or more of the following:
service identification information;
identification information of the second terminal;
a sidelink target L2 identity associated with the service.

In some embodiments, the processor is further configured to read the computer program from the memory and perform the following operations:
if RLF recovery is successful or RRC reconfiguration is successful on the first target interface, transmitting second indication information to the second terminal through the first interface.

In some embodiments, the second indication information includes one or more of the following:
fourth information, used to indicate that RLF recovery is successful or RRC connection re-establishment is successful or RRC reconfiguration is successful;
an identity of an interface on which RLF recovery or RRC connection reestablishment or RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the first indication information and/or the second indication information is transmitted through one or more of the following manners:
broadcast, multicast, unicast.

In a fourth aspect, embodiments of the present disclosure provide an information indication apparatus, which is applied to a second terminal, and includes: a memory, a transceiver, and a processor:
the memory, configured to store a computer program; the transceiver, configured to transmit and receive data under control of the processor; the processor, configured to read the computer program from the memory and perform the following operations:
receiving first indication information sent by a first terminal through a first interface, wherein the first indication information is transmitted in a case that a first event occurs on a first target interface and is used to indicate suspending a target object or releasing the target object on a second target interface, the first interface is a sidelink interface between the first terminal and the second terminal, and the second terminal includes one or more terminals having an association relationship with the first terminal;
suspending the target object on the second target interface or releasing the target object according to the first indication information.

In some embodiments, the first event includes one or more of the following:
RLF;
RLF recovery failure;
RRC connection re-establishment failure.
RRC reconfiguration failure.

In some embodiments, the first indication information includes one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface includes one or more of the following:
Uu interface;
sidelink interface.

In some embodiments, the target object includes one or more of the following:
a Uu interface bearer and/or logical channel;
a sidelink interface bearer and/or logical channel.

In some embodiments, the processor is further configured to read the computer program from the memory and perform the following operations:
suspending or releasing the target object on the second target interface according to the second information and/or the third information.

In some embodiments, the processor is further configured to read the computer program from the memory and perform the following operations:
receiving second indication information sent by the first terminal through the first interface.

In some embodiments, the second indication information includes one or more of the following:
fourth information, used to indicate that RLF recovery is successful or RRC connection re-establishment is successful or RRC reconfiguration is successful;
an interface identity of an interface on which RLF recovery or RRC connection re-establishment or RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the processor is further configured to read the computer program from the memory and perform the following operations:
resuming data transmission of the target object on the second target interface according to the fifth information and/or the sixth information.

In a fifth aspect, embodiments of the present disclosure provide an information indication apparatus, which is applied to a first terminal, and includes:
a first sending unit, configured to transmit first indication information to a second terminal through a first interface in a case that a first event occurs on a first target interface;
wherein the first indication information is used to indicate suspending a target object or releasing the target object on a second target interface, the first interface is a sidelink interface between the first terminal and the second terminal, and the second terminal includes one or more terminals having an association relationship with the first terminal.

In a sixth aspect, embodiments of the present disclosure provide an information indication apparatus, which is applied to a second terminal, and includes:
a first receiving unit, configured to receive first indication information sent by a first terminal through a first interface, wherein the first indication information is transmitted in a case that a first event occurs on a first target interface and is used to indicate suspending a target object or releasing the target object on a second target interface, the first interface is a sidelink interface between the first terminal and the second terminal, and the second terminal includes one or more terminals having an association relationship with the first terminal;
a first processing unit, configured to suspend the target object on the second target interface or release the target object according to the first indication information.

In a seventh aspect, embodiments of the present disclosure further provide a processor-readable storage medium, on which a computer program is stored, and when executed by a processor, the computer program implements the steps of the information indication method as described above.

In the embodiments of the present disclosure, in a case that a first event occurs on a first target interface, first indication information is transmitted to a second terminal through a first interface, so that the second terminal can suspend a target object or release the target object on a second target interface. Therefore, by using the solution of the embodiments of the present disclosure, when one service flow in a service cannot be transmitted, continued data transmission of other service flows can be avoided, thereby ensuring transmission synchronization among multiple different target objects corresponding to multimodal services.

### BRIEF DESCRIPTION OF THE DRAWINGS

FIG. 1 shows a schematic diagram of cellular network communication;
FIG. 2 shows a schematic diagram of sidelink;
FIG. 3 shows a first flowchart of an information indication method according to an embodiment of the present disclosure;
FIG. 4 shows a second flowchart of an information indication method according to an embodiment of the present disclosure;
FIG. 5 shows a third flowchart of an information indication method according to an embodiment of the present disclosure;
FIG. 6 shows a fourth flowchart of an information indication method according to an embodiment of the present disclosure;
FIG. 7 shows a fifth flowchart of an information indication method according to an embodiment of the present disclosure;
FIG. 8 shows a sixth flowchart of an information indication method according to an embodiment of the present disclosure;
FIG. 9 shows a first schematic structural diagram of an information indication apparatus according to an embodiment of the present disclosure;
FIG. 10 shows a second schematic structural diagram of an information indication apparatus according to an embodiment of the present disclosure;
FIG. 11 shows a third schematic structural diagram of an information indication apparatus according to an embodiment of the present disclosure;
FIG. 12 shows a fourth schematic structural diagram of an information indication apparatus according to an embodiment of the present disclosure.

### DETAILED DESCRIPTION

In the embodiments of the present disclosure, the term "and/or" describes an association relationship of associated objects, indicating three possible relationships, for example, A and/or B may indicate: A alone, A and B simultaneously, or B alone. The character "/" generally indicates an "or" relationship between the associated objects before and after the character.

In the embodiments of the present disclosure, the term "multiple" refers to two or more, and other quantifiers are similar.

The technical solutions in the embodiments of the present disclosure will be clearly and completely described below with reference to the accompanying drawings of the embodiments. It is apparent that the described embodiments are only part of the embodiments of the present disclosure and are not all of the embodiments. All other embodiments obtained by those of ordinary skill in the art without creative efforts based on the embodiments of the present disclosure fall within the scope of protection of the present disclosure.

Embodiments of the present disclosure provide an information indication method and apparatus, which are used to ensure transmission synchronization among multiple different target objects corresponding to multimodal services.

The method and the apparatus are conceived based on the same application concept. Since the principles for solving problems are similar between the apparatus and the method, the implementations of the apparatus and the method may refer to each other, and repeated descriptions are omitted.

Referring to FIG. 3, FIG. 3 shows a flowchart of an information indication method provided in embodiments of the present disclosure, which is applied to a first terminal. As shown in FIG. 3, the method includes the following steps:
Step 301, in a case that a first event occurs on a first target interface, transmitting first indication information to a second terminal through a first interface.

The first indication information is used to indicate suspending a target object or releasing the target object on a second target interface, the first interface is a sidelink interface between the first terminal and the second terminal, and the second terminal includes one or more terminals having an association relationship with the first terminal.

**In** the embodiments of the present disclosure, " having an association relationship" indicates that the second terminal and the first terminal simultaneously transmit the same service, for example, different QoS flows of the same multimodal XR service are transmitted simultaneously by the second terminal and the first terminal.

The first event includes one or more of the following: radio link failure (RLF); RLF recovery failure; radio resource control (RRC) connection re-establishment failure; RRC reconfiguration failure.

The first target interface or the second target interface includes one or more of the following: Uu interface; sidelink interface (PC5 interface).

The target object includes one or more of the following: a Uu interface bearer and/or logical channel; a sidelink interface bearer and/or logical channel.

The first indication information includes one or more of the following:
first information, used to indicate the first event;
a first target interface corresponding to the first event, for example, a Uu interface and/or a PC5 interface;
service identification information, for example, a Common ID corresponding to the service interrupted due to the first event, or an L2 ID (layer 2 identity) of the sidelink interface corresponding to the service;
second information, used to indicate information of an operation to be performed by the second terminal on the second target interface, for example, suspending the target object or releasing the target object;
third information, used to indicate a target object corresponding to the operation to be performed by the second terminal on the second target interface.

The first indication information may be transmitted in one or more of the following manners: broadcast, multicast, or unicast.

In the embodiments of the present disclosure, if the first terminal determines that the second terminal exists, the first indication information is transmitted to the second terminal through the first interface.

Specifically, the first terminal may determine the second terminal according to one or more of the following information:
first configuration information sent by a network apparatus; second configuration information sent by an upper layer of the first terminal.

The first configuration information or the second configuration information includes one or more of the following:
service identification information, for example, a Common ID corresponding to an XR service;
identification information of the second terminal, which may be a Uu interface identity such as a Cell Radio Network Temporary Identifier (C-RNTI), or a sidelink interface identity such as a sidelink target L2 ID;
a sidelink target L2 identity associated with the service.

In the embodiments of the present disclosure, in a case that a first event occurs on a first target interface, first indication information is transmitted to a second terminal through a first interface, so that the second terminal can suspend a target object or release the target object on a second target interface. Therefore, by using the solution of the embodiments of the present disclosure, when one service flow in a service cannot be transmitted, continued data transmission of other service flows can be avoided, thereby ensuring transmission synchronization among multiple different target objects corresponding to multimodal services.

In some embodiments, on the basis of the above embodiments, if RLF recovery is successful or RRC reconfiguration is successful on the first target interface, second indication information is transmitted to the second terminal through the first interface.

The second indication information includes one or more of the following:
fourth information, used to indicate that RLF recovery is successful or RRC connection re-establishment is successful or RRC reconfiguration is successful;
an identity of an interface on which RLF recovery or RRC connection reestablishment or RRC reconfiguration is successfully performed, for example, Uu interface and/or PC5 interface indication information;
a service identity of the service to be resumed for transmission, for example, a Common ID corresponding to a service interrupted due to RLF or an L2 ID of a sidelink interface;
fifth information, used to indicate information of an operation to be performed by the second terminal on the second target interface, for example, resuming data transmission of the target object;
sixth information, used to indicate a target object corresponding to the operation to be performed by the second terminal on the second target interface.

The second indication information may be transmitted in one or more of the following manners: broadcast, multicast, or unicast.

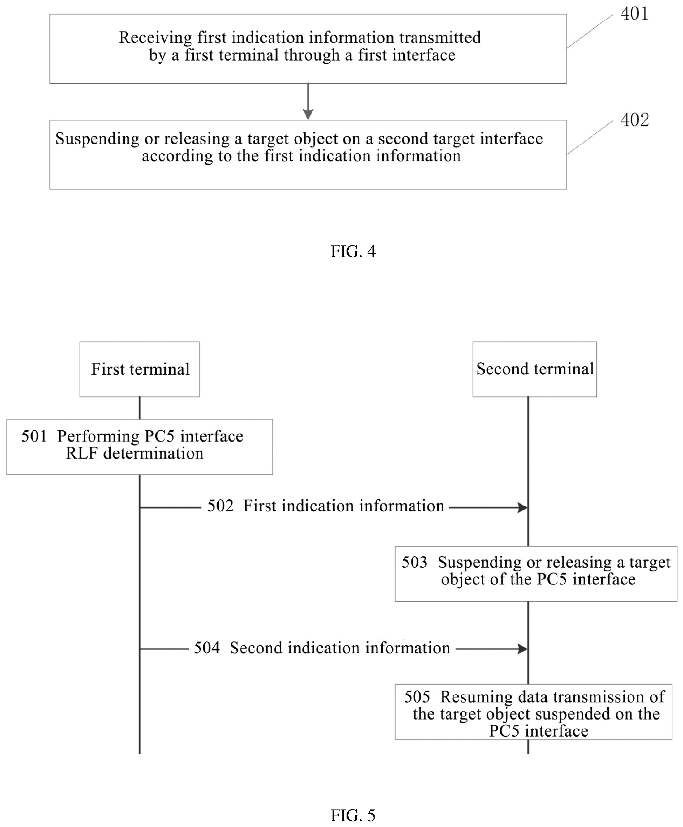

Referring to FIG. 4, FIG. 4 shows a flowchart of an information indication method provided in embodiments of the present disclosure, which is applied to a second terminal. As shown in FIG. 4, the method includes the following steps:
Step 401, receiving first indication information sent by a first terminal through a first interface, wherein the first indication information is transmitted in a case that a first event occurs on a first target interface and is used to indicate suspending a target object or releasing the target object on a second target interface, the first interface is a sidelink interface between the first terminal and the second terminal, and the second terminal includes one or more terminals having an association relationship with the first terminal.

The explanations and meanings of the first event, the first indication information, the first target interface, the second target interface, and the target object may refer to the descriptions in the method embodiments above.

Step 402, suspending the target object on the second target interface or releasing the target object according to the first indication information.

In this step, the target object may be suspended or released on the second target interface according to the second information and/or the third information of the first indication information.

In the embodiments of the present disclosure, in a case that a first event occurs on a first target interface, first indication information is transmitted to a second terminal through a first interface, so that the second terminal can suspend a target object or release the target object on a second target interface. Therefore, by using the solution of the embodiments of the present disclosure, when one service flow in a service cannot be transmitted, continued data transmission of other service flows can be avoided, thereby ensuring transmission synchronization among multiple different target objects corresponding to multimodal services.

In some embodiments of the present disclosure, the second terminal may further receive second indication information sent by the first terminal through the first interface.

The second indication information includes one or more of the following:
fourth information, used to indicate that RLF recovery is successful or RRC connection re-establishment is successful or RRC reconfiguration is successful;
an identity of an interface on which RLF recovery or RRC connection reestablishment or RRC reconfiguration is successfully performed, for example, Uu interface and/or PC5 interface indication information;
a service identity of the service to be resumed for transmission, for example, a Common ID corresponding to a service interrupted due to RLF or an L2 ID of a sidelink interface;
fifth information, used to indicate information of an operation to be performed by the second terminal on the second target interface, for example, resuming data transmission of the target object;
sixth information, used to indicate a target object corresponding to the operation to be performed by the second terminal on the second target interface.

The second indication information may be transmitted in one or more of the following manners: broadcast, multicast, or unicast.

In some embodiments, the second terminal may resume data transmission of the target object on the second target interface according to the fourth information and/or the fifth information and/or the sixth information.

In the embodiments of the present disclosure, the first event is described using RLF or RRC connection re-establishment failure as an example.

In one embodiment, multiple terminals perform multimodal service collaborative transmission over a sidelink interface. Referring to FIG. 5, the embodiment may include:
Step 501, a first terminal performs PC5 interface RLF determination.

If an RLF occurs on the PC5 interface, the following process is performed.

Step 502, the first terminal transmits first indication information to one or more second terminals having an association relationship with the first terminal through the PC5 interface.

Specifically, only when the first terminal determines that one or more second terminals having an association relationship with the first terminal exist, the first terminal transmits the first indication information to one or more second terminals through the sidelink interface. The first indication information may be transmitted in any one of broadcast, multicast, or unicast manners.

The method by which the first terminal determines the second terminal having an association relationship includes any one of the following:
(1) determining according to first configuration information sent by a network apparatus.
(2) determining according to second configuration information sent by an upper layer of the first terminal.

The contents of the first configuration information or the second configuration information include any one or more of the following combinations:
(1) service identification information, for example, a Common ID corresponding to an XR service;
(2) identification information of a second terminal having an association relationship with the first terminal (which may be a Uu interface identity such as a C-RNTI, or a sidelink interface identity such as a sidelink target L2 ID);
(3) a sidelink target L2 ID associated with the service.

The contents of the first indication information include any one or more of the following combinations:
first information, used to indicate RLF;
an interface corresponding to RLF (PC5 interface);
service identification information (for example, a Common ID corresponding to a service interrupted due to RLF, or a sidelink interface L2 ID corresponding to the service);
second information, used to indicate information of an operation to be performed by the second terminal on the second target interface;
third information, used to indicate a target object corresponding to the operation to be performed by the second terminal on the second target interface.

That is, the second information and the third information indicate operation instruction information to be executed by the second terminal and/or a target object on which the second terminal is to execute the operation. The specific operation refers to suspending the target object or releasing the target object.

Step 503, after receiving the first indication information from the PC5 interface, the second terminal suspends a PC5 interface target object or releases the target object.

The target object includes: a PC5 interface bearer and/or a PC5 interface logical channel. The second terminal may determine the target object according to the first indication information. For example, if the first indication information is service identification information, the terminal may determine the target object associated with the service identification information.

If the operation performed by the second terminal in Step 503 is suspending the target object, Step 504 may be further performed in some embodiments.

Step 504, if RLF recovery is successful or RRC connection re-establishment is successful, the first terminal transmits second indication information to the one or more second terminals.

If the first terminal experiences an RLF on a target interface, the first terminal transmits first indication information to one or more second terminals having an association relationship with the first terminal through the sidelink interface, and the second terminal suspends transmission of the target object according to the received first indication information. If the first terminal achieves successful RLF recovery or RRC re-establishment, the first terminal transmits second indication information to the one or more second terminals having an association relationship with the first terminal through the sidelink interface.

The contents of the second indication information include any one or more of the following combinations:
fourth information, used to indicate that RLF recovery is successful or RRC connection re-establishment is successful or RRC reconfiguration is successful;
an interface identity of an interface on which RLF recovery or RRC connection re-establishment or RRC reconfiguration is successfully performed (PC5 interface indication information);
a service identity of the service to be resumed for transmission (for example, a Common ID corresponding to a service interrupted due to RLF or an L2 ID of a sidelink interface);
fifth information, used to indicate information of an operation to be performed by the second terminal on the second target interface;
sixth information, used to indicate a target object corresponding to the operation to be performed by the second terminal on the second target interface.

The fifth information and the sixth information indicate operation instruction information to be executed by the second terminal and/or a target object on which the second terminal is to execute the operation, and the specific operation refers to resuming data transmission of the target object.

Step 505, the second terminal resumes data transmission of the target object suspended on the PC5 interface.

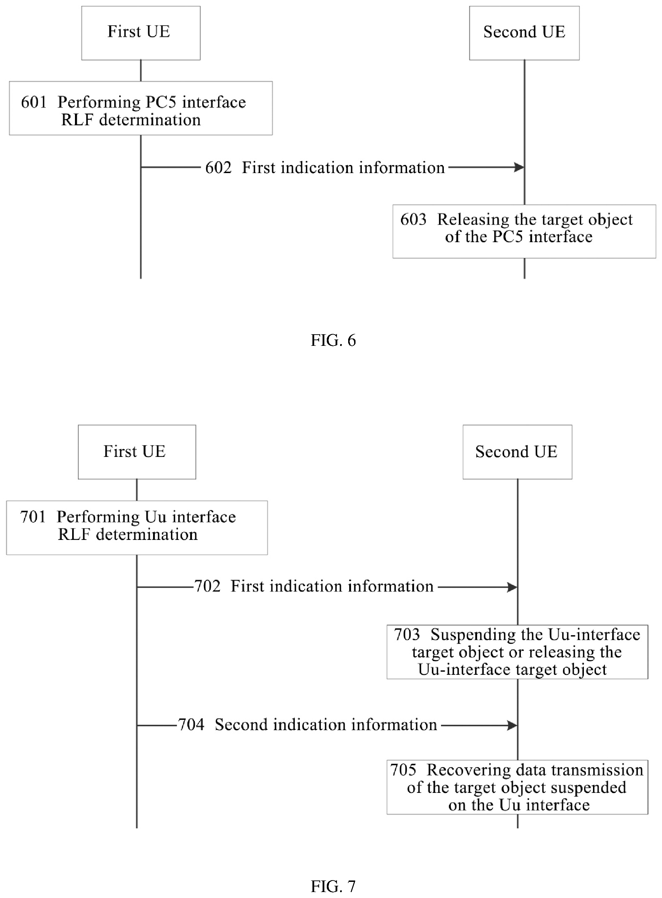

In one embodiment, multiple terminals perform multimodal service collaborative transmission over a sidelink interface. Referring to FIG. 6, the embodiment may include:
Step 601, a first terminal performs PC5 interface RLF determination.

The first terminal performs PC5 interface RLF determination. If PC5 RLF fails, the terminal performs PC5 RLF recovery or PC5 RRC connection re-establishment. If PC5 RLF recovery fails or PC5 RRC connection re-establishment fails, Step 602 is performed.

Step 602, the first terminal transmits first indication information to one or more second terminals having an association relationship with the first terminal through the PC5 interface.

Specifically, only when the first terminal determines that one or more second terminals having an association relationship with the first terminal exist, the first terminal transmits the first indication information to one or more second terminals through the sidelink interface. The first indication information may be transmitted in any one of broadcast, multicast, or unicast manners.

The method by which the first terminal determines a second terminal having an association relationship includes any one of the following:
(1) determining according to first configuration information sent by a network apparatus.
(2) determining according to second configuration information sent by an upper layer of the first terminal.

The contents of the first configuration information or the second configuration information include any one or more of the following combinations:
(1) service identification information, for example, a Common ID corresponding to an XR service;
(2) a sidelink target L2 ID corresponding to the service identification information;
(3) identification information of the second terminal, for example, a sidelink L2 ID corresponding to the second terminal.

The contents of the first indication information include any one or more of the following combinations:
first information, used to indicate RRC connection re-establishment failure;
an interface corresponding to the RRC connection re-establishment failure (PC5 interface);
service identification information (for example, a Common ID corresponding to a service interrupted due to RRC connection re-establishment failure or a sidelink interface L2 ID corresponding to the service);
second information, used to indicate information of an operation to be performed by the second terminal on the second target interface;
third information, used to indicate a target object corresponding to the operation to be performed by the second terminal on the second target interface.

That is, the second information and the third information indicate operation instruction information to be executed by the second terminal and/or a target object on which the second terminal is to execute the operation. The specific operation refers to suspending the target object or releasing the target object.

Step 603, after receiving the first indication information from the PC5 interface, the second terminal releases the target object on the PC5 interface.

The target object includes: a PC5 interface bearer and/or a PC5 interface logical channel. The second terminal may determine the target object according to the first indication information. For example, if the first indication information is service identification information, the terminal may determine the target object associated with the service identification information.

In one embodiment of the present disclosure, multiple terminals perform multimodal service collaborative transmission over a Uu interface. Referring to FIG. 7, the embodiment may include:
Step 701, a first terminal performs Uu interface RLF determination.

The first terminal performs Uu interface RLF determination. If an RLF occurs on the Uu interface, Step 702 is performed.

Step 702, the first terminal transmits first indication information to one or more second terminals having an association relationship with the first terminal through the PC5 interface.

Specifically, only when the first terminal determines that one or more second terminals having an association relationship with the first terminal exist, the first terminal transmits the first indication information to one or more second terminals through the sidelink interface. The first indication information may be transmitted in any one of broadcast, multicast, or unicast manners.

The method by which the first terminal determines a second terminal having an association relationship includes any one of the following:
(1) determining according to first configuration information sent by a network apparatus.
(2) determining according to second configuration information sent by an upper layer of the first terminal.

The contents of the first configuration information or the second configuration information include any one or more of the following combinations:
(1) service identification information, for example, a Common ID corresponding to an XR service;
(2) identification information of the second terminal having an association relationship with the first terminal (which may be a Uu interface identifier, for example, a C-RNTI, or a sidelink interface identifier, for example, a sidelink target L2 ID);
(3) a sidelink target L2 ID associated with the service.

The contents of the first indication information include any one or more of the following combinations:
first information, used to indicate RLF;
an interface corresponding to the RLF (Uu interface);
service identification information (for example, a Common ID corresponding to a service interrupted due to RLF or a sidelink L2 ID corresponding to the service);
second information, used to indicate information of an operation to be performed by the second terminal on the second target interface;
third information, used to indicate a target object corresponding to the operation to be performed by the second terminal on the second target interface.

That is, the second information and the third information indicate operation instruction information to be executed by the second terminal (for example, an identifier of a target object to be stopped by the second terminal or an identifier of a target object to be released).

Step 703, after receiving the first indication information from the PC5 interface, the second terminal suspends a Uu interface target object or releases the Uu interface target object.

The target object includes: a Uu interface bearer and/or a Uu interface logical channel. The second terminal may determine the target object according to the first indication information. For example, if the first indication information is service identification information, the terminal may determine the target object associated with the service identification information.

If the operation performed by the second terminal in Step 703 is suspending the target object, Step 704 may be further performed in some embodiments.

Step 704, when the first terminal succeeds in RLF recovery or RRC connection re-establishment on the Uu interface, the first terminal transmits second indication information to one or more second terminals having an association relationship with the first terminal.

If the first terminal encounters an RLF on the target interface, the first terminal transmits first indication information to one or more second terminals having an association relationship with the first terminal through the sidelink interface, and the second terminal suspends data transmission of the target object according to the received first indication information. If the first terminal succeeds in RLF recovery or connection re-establishment, the first terminal transmits second indication information to one or more second terminals having an association relationship with the first terminal through the sidelink interface.

The contents of the second indication information include any one or more of the following combinations:
fourth information, used to indicate RLF recovery success or RRC connection re-establishment success or RRC reconfiguration success;
an interface identifier for which the RLF recovery or the RRC connection reestablishment or the RRC reconfiguration is successfully performed (Uu interface indication information);
a service identity of the service to be resumed for transmission (for example, a Common ID corresponding to a service interrupted due to RLF or a sidelink interface L2 ID);
fifth information, used to indicate information of an operation to be performed by the second terminal on the second target interface;
sixth information, used to indicate a target object corresponding to the operation to be performed by the second terminal on the second target interface.

The fifth information and the sixth information indicate operation instruction information to be executed by the second terminal and/or a target object on which the second terminal is to execute the operation, and the specific operation refers to the target object for which data transmission is to be resumed.

Step 705, the second terminal resumes data transmission of the target object suspended on the Uu interface.

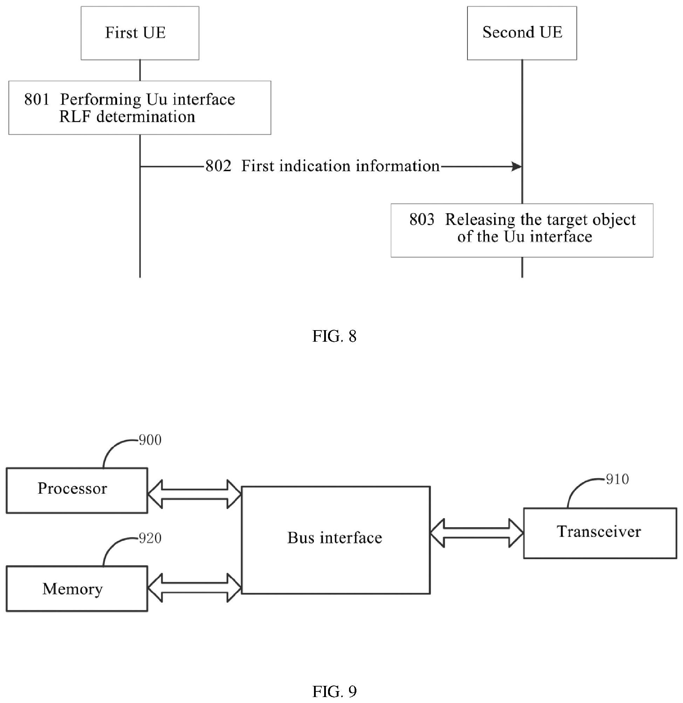

In one embodiment of the present disclosure, multiple terminals perform multimodal service collaborative transmission over a Uu interface. Referring to FIG. 8, the process may include:
Step 801, the first terminal performs Uu interface RLF determination.

The first terminal performs Uu interface RLF determination. If Uu RLF fails, the first terminal performs Uu interface RLF recovery or Uu interface RRC connection reestablishment. If Uu interface RLF recovery fails or Uu interface RRC connection reestablishment fails, Step 802 is performed.

Step 802, the first terminal transmits first indication information to one or more second terminals having an association relationship with the first terminal through the PC5 interface.

Specifically, only when the first terminal determines that one or more second terminals having an association relationship with the first terminal exist, the first terminal transmits the first indication information to one or more second terminals through the sidelink interface. The first indication information may be transmitted in any one of broadcast, multicast, or unicast manners.

The method by which the first terminal determines a second terminal having an association relationship includes any one of the following:
(1) determining according to first configuration information sent by a network apparatus.
(2) determining according to second configuration information sent by an upper layer of the first terminal.

The contents of the first configuration information or the second configuration information include any one or more of the following combinations:
(1) service identification information, for example, a Common ID corresponding to an XR service;
(2) a sidelink target L2 ID corresponding to the service identification information;
(3) identification information of the second terminal, for example, a sidelink L2 ID corresponding to the second terminal.

The contents of the first indication information include any one or more of the following combinations:
first information, used to indicate RLF recovery success or RRC connection reestablishment success or RRC reconfiguration success;
an interface identifier for which the RLF recovery or the RRC connection reestablishment or the RRC reconfiguration is successfully performed (PC5 interface indication information);
a service identity of the service to be resumed for transmission (for example, a Common ID corresponding to a service interrupted due to RLF or a sidelink interface L2 ID);
second information, used to indicate information of an operation to be performed by the second terminal on the second target interface;
third information, used to indicate a target object corresponding to the operation to be performed by the second terminal on the second target interface.

That is, the second information and the third information indicate operation instruction information to be executed by the second terminal and/or a target object on which the second terminal is to execute the operation, and the specific operation refers to the target object for which data transmission is to be resumed.

Step 803, after receiving the first indication information from the PC5 interface, the second terminal releases the target object on the Uu interface.

The target object includes: a Uu interface bearer and/or a Uu interface logical channel. The terminal may determine the target object according to the first indication information. For example, if the first indication information is service identification information, the terminal may determine the target object associated with the service identification information.

In the embodiments of the present disclosure, when one service flow of a multimodal service cannot be transmitted, other service flows can be prevented from continuing data transmission, thereby avoiding unnecessary resource waste.

The technical solution provided in the embodiments of the present disclosure may be applicable to various systems, especially 5G systems. For example, applicable systems may include a global system of mobile communication (GSM), a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a fifth generation mobile communication technology (5G) new radio (NR) system, and so on. These systems all include terminal apparatuss and network apparatuss. The system may further include a core network part, for example, an evolved packet system (EPS) or a 5G system (5GS).

The terminal apparatus involved in the embodiments of the present disclosure may refer to a apparatus that provides a user with voice and/or data connectivity, such as a handheld apparatus with wireless connection capability or another processing apparatus connected to a wireless modem. In different systems, the name of the terminal apparatus may differ. For example, in a 5G system, the terminal apparatus may be referred to as user equipment (UE). A wireless terminal apparatus may communicate with one or more core networks (CNs) through a radio access network (RAN). The wireless terminal apparatus may be a mobile terminal apparatus, such as a mobile phone (also referred to as a "cellular" phone) or a computer having a mobile terminal apparatus, for example, a portable, pocket-sized, handheld, built-in, or vehicle-mounted mobile apparatus that exchanges voice and/or data with the radio access network. Examples include a personal communication service (PCS) phone, a cordless telephone, a Session Initiated Protocol (SIP) phone, a wireless local loop (WLL) station, a personal digital assistant (PDA), and so on. The wireless terminal apparatus may also be referred to as a system, subscriber unit, subscriber station, mobile station, mobile, remote station, access point, remote terminal, access terminal, user terminal, user agent, or user apparatus, without limitation in the embodiments of the present disclosure.

The network apparatus involved in the embodiments of the present disclosure may be a base station, and the base station may include multiple cells providing services to terminals. Depending on the specific application scenario, the base station may also be referred to as an access point, or may be a apparatus in an access network that communicates with wireless terminal apparatuss over an air interface through one or more sectors. The network apparatus may be used to exchange received air-interface frames with Internet Protocol (IP) packets, functioning as a router between the wireless terminal apparatus and the rest of the access network, where the rest of the access network may include an IP communication network. The network apparatus may also coordinate attribute management of the air interface. For example, the network apparatus involved in the embodiments of the present disclosure may be a base transceiver station (BTS) in a global system for mobile communications (GSM) or a code division multiple access (CDMA) system, a NodeB in a wideband code division multiple access (WCDMA) system, an evolved NodeB (eNB or e-NodeB) in a long term evolution (LTE) system, or a 5G base station (gNB) in a next generation system (NGS). It may also be a Home evolved NodeB (HeNB), a relay node, a femto base station, or a pico base station, without limitation in the embodiments of the present disclosure. In some network architectures, the network apparatus may include a centralized unit (CU) node and a distributed unit (DU) node, and the CU and DU may also be physically separated.

MIMO transmission may be performed between the network apparatus and the terminal apparatus using one or more antennas respectively. The MIMO transmission may be single user MIMO (SU-MIMO) or multiple user MIMO (MU-MIMO). According to the form and number of antenna combinations, the MIMO transmission may be two-dimensional MIMO (2D-MIMO), three-dimensional MIMO (3D-MIMO), full-dimension MIMO (FD-MIMO), or massive-MIMO. It may also be diversity transmission, precoding transmission, or beamforming transmission.

As shown in FIG. 9, an information indication apparatus according to an embodiment of the present disclosure, applied to a first terminal, includes: a processor 900, configured to read a program in a memory 920 and execute the following process:
in a case where a first event occurs on a first target interface, transmitting first indication information to a second terminal through a first interface;
wherein the first indication information is used for indicating suspending a target object or releasing the target object on a second target interface, and the first interface is a sidelink interface between the first terminal and the second terminal, and the second terminal comprises one or more terminals having an association relationship with the first terminal.

A transceiver 910, configured to receive and transmit data under control of the processor 900.

In FIG. 9, the bus architecture may include any number of interconnected buses and bridges, specifically used to interconnect various circuits of one or more processors represented by the processor 900 and memory represented by the memory 920. The bus architecture may also interconnect various other circuits, such as peripheral apparatuss, regulators, and power management circuits, all of which are well known in the art and thus are not further described herein. The bus interface provides an interface. The transceiver 910 may consist of multiple components, including a transmitter and a receiver, providing a unit for communication with various other apparatuss over a transmission medium. For different user apparatuss, the user interface 930 may also be an interface capable of externally or internally connecting required apparatuss, including but not limited to a keypad, a display, a speaker, a microphone, and a joystick.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic apparatus (CPLD), and the processor may also adopt a multi-core architecture.

By invoking a computer program stored in the memory, the processor is configured to execute any of the methods provided in the embodiments of the present disclosure according to acquired executable instructions. The processor and the memory may also be physically disposed separately.

In some embodiments, the first event comprises any one or more of the following:
RLF;
RLF recovery failure;
RRC connection re-establishment failure;
RRC reconfiguration failure.

In some embodiments, the first indication information comprises any one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface comprises any one or more of the following:
a Uu interface;
a sidelink interface.

In some embodiments, the target object comprises any one or more of the following:
a Uu interface bearer and/or a logical channel;
a sidelink interface bearer and/or a logical channel.

The processor 900 is further configured to read the program and perform the following step:
if it is determined that the second terminal exists, transmitting the first indication information to the second terminal through the first interface.

The processor 900 is further configured to read the program and perform the following step:
determining the second terminal according to any one or more of the following information:
first configuration information sent by a network apparatus;
second configuration information sent by an upper layer of the first terminal.

In some embodiments, the first configuration information or the second configuration information comprises any one or more of the following:
service identification information;
identification information of the second terminal;
a sidelink target L2 identification associated with the service.

The processor 900 is further configured to read the program and perform the following step:
if RLF recovery on the first target interface succeeds or RRC reconfiguration succeeds, transmitting second indication information to the second terminal through the first interface.

In some embodiments, the second indication information comprises any one or more of the following:
fourth information, used to indicate RLF recovery success or RRC connection re-establishment success or RRC reconfiguration success;
an interface identifier for which the RLF recovery or the RRC connection reestablishment or the RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the first indication information and/or the second indication information is transmitted in any one or more of the following manners:
broadcast, multicast, unicast.

It should be noted that the apparatus provided in the embodiments of the present disclosure can implement all the method steps implemented in the foregoing method embodiments and can achieve the same technical effects. Therefore, the parts identical to the method embodiments and the beneficial effects thereof will not be further described herein.

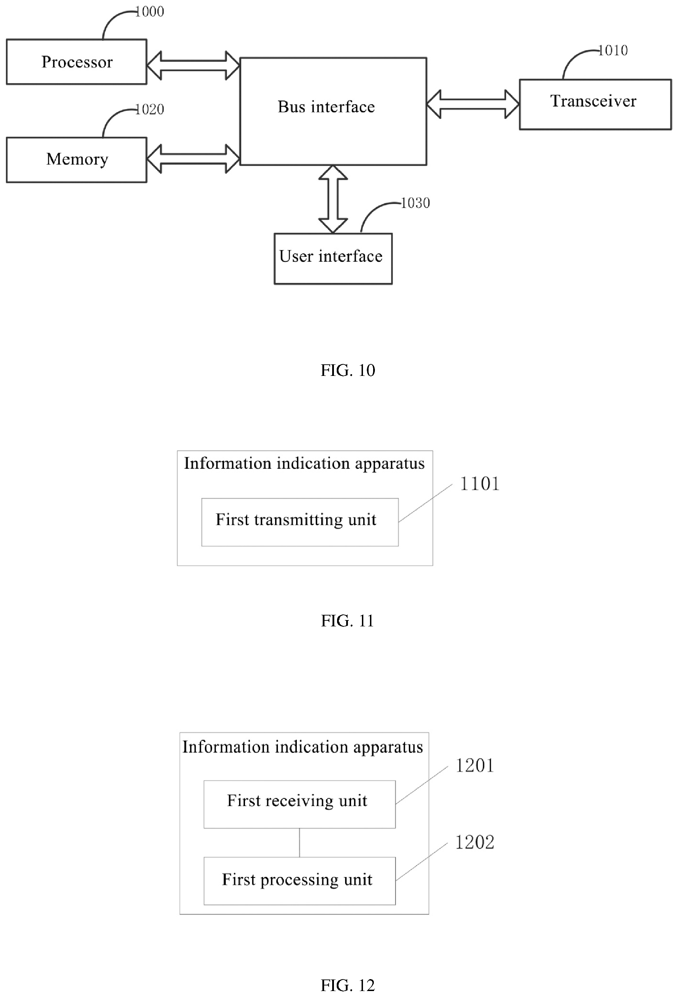

As shown in FIG. 10, an information indication apparatus according to an embodiment of the present disclosure, applied to a second terminal, includes: a processor 1000, configured to read a program in a memory 1020 and execute the following process:
receiving first indication information sent by a first terminal through a first interface, wherein the first indication information is sent in a case where a first event occurs on a first target interface and is used to indicate suspending a target object or releasing the target object on a second target interface, and the first interface is a sidelink interface between the first terminal and the second terminal, and the second terminal comprises one or more terminals having an association relationship with the first terminal;
suspending the target object or releasing the target object on the second target interface according to the first indication information.

A transceiver 1010, configured to receive and transmit data under control of the processor 1000.

In FIG. 10, the bus architecture may include any number of interconnected buses and bridges, specifically used to interconnect various circuits of one or more processors represented by the processor 1000 and memory represented by the memory 1020. The bus architecture may also interconnect various other circuits, such as peripheral apparatuss, regulators, and power management circuits, all of which are well known in the art and thus are not further described herein. The bus interface provides an interface. The transceiver 1010 may consist of multiple components, including a transmitter and a receiver, providing a unit for communication with various other apparatuss over a transmission medium. For different user apparatuss, the user interface 1030 may also be an interface capable of externally or internally connecting required apparatuss, including but not limited to a keypad, a display, a speaker, a microphone, and a joystick.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic apparatus (CPLD), and the processor may also adopt a multi-core architecture.

By invoking a computer program stored in the memory, the processor is configured to execute any of the methods provided in the embodiments of the present disclosure according to acquired executable instructions. The processor and the memory may also be physically disposed separately.

In some embodiments, the first event comprises any one or more of the following:
RLF;
RLF recovery failure;
RRC connection re-establishment failure;
RRC reconfiguration failure.

In some embodiments, the first indication information comprises any one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface comprises any one or more of the following:
a Uu interface;
a sidelink interface.

In some embodiments, the target object comprises any one or more of the following:
a Uu interface bearer and/or a logical channel;
a sidelink interface bearer and/or a logical channel.

The processor 1000 is further configured to read the program and perform the following step:
suspending or releasing the target object on the second target interface according to the second information and/or the third information.

The processor 1000 is further configured to read the program and perform the following step:
receiving second indication information sent by the first terminal through the first interface.

In some embodiments, the second indication information comprises any one or more of the following:
fourth information, used to indicate RLF recovery success or RRC connection re-establishment success or RRC reconfiguration success;
an interface identifier for which the RLF recovery or the RRC connection reestablishment or the RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

The processor 1000 is further configured to read the program and perform the following step:
resuming data transmission of the target object on the second target interface according to the fourth information and/or the fifth information and/or the sixth information.

It should be noted that the apparatus provided in the embodiments of the present disclosure can implement all the method steps implemented in the foregoing method embodiments and can achieve the same technical effects. Therefore, the parts identical to the method embodiments and the beneficial effects thereof will not be further described herein.

As shown in FIG. 11, an information indication apparatus according to an embodiment of the present disclosure, applied to a first terminal, includes:
a first sending unit 1101, configured to transmit first indication information to a second terminal through a first interface in a case where a first event occurs on a first target interface;
wherein the first indication information is used for indicating suspending a target object or releasing the target object on a second target interface, and the first interface is a sidelink interface between the first terminal and the second terminal, and the second terminal comprises one or more terminals having an association relationship with the first terminal.

In some embodiments, the first event comprises any one or more of the following:
RLF;
RLF recovery failure;
RRC connection re-establishment failure;
RRC reconfiguration failure.

In some embodiments, the first indication information comprises any one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface comprises any one or more of the following:
a Uu interface;
a sidelink interface.

In some embodiments, the target object comprises any one or more of the following:
a Uu interface bearer and/or a logical channel;
a sidelink interface bearer and/or a logical channel.

In some embodiments, the first sending unit is further configured to transmit the first indication information to the second terminal through the first interface if it is determined that the second terminal exists.

In some embodiments, the apparatus further comprises:
a first processing unit, configured to determine the second terminal according to any one or more of the following information:
first configuration information sent by a network apparatus;
second configuration information sent by an upper layer of the first terminal.

In some embodiments, the first configuration information or the second configuration information comprises any one or more of the following:
service identification information;
identification information of the second terminal;
a sidelink target layer 2 (L2) identification associated with the service.

In some embodiments, the apparatus further comprises:
a second sending unit, configured to transmit second indication information to the second terminal through the first interface if RLF recovery on the first target interface succeeds or RRC reconfiguration succeeds.

In some embodiments, the second indication information comprises any one or more of the following:
fourth information, used to indicate RLF recovery success or RRC connection re-establishment success or RRC reconfiguration success;
an interface identifier for which the RLF recovery or the RRC connection reestablishment or the RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the first indication information and/or the second indication information is transmitted in any one or more of the following manners:
broadcast, multicast, unicast.

It should be noted that the apparatus provided in the embodiments of the present disclosure can implement all the method steps implemented in the foregoing method embodiments and can achieve the same technical effects. Therefore, the parts identical to the method embodiments and the beneficial effects thereof will not be further described herein.

As shown in FIG. 12, an information indication apparatus according to an embodiment of the present disclosure, applied to a second terminal, includes:
a first receiving unit 1201, configured to receive first indication information sent by a first terminal through a first interface, wherein the first indication information is sent in a case where a first event occurs on a first target interface and is used to indicate suspending a target object or releasing the target object on a second target interface, and the first interface is a sidelink interface between the first terminal and the second terminal, and the second terminal comprises one or more terminals having an association relationship with the first terminal;
a first processing unit 1202, configured to suspend the target object or release the target object on the second target interface according to the first indication information.

In some embodiments, the first event comprises any one or more of the following:
RLF;
RLF recovery failure;
RRC connection re-establishment failure;
RRC reconfiguration failure.

In some embodiments, the first indication information comprises any one or more of the following:
first information, used to indicate the first event;
a first target interface corresponding to the first event;
service identification information;
second information, used to indicate information of an operation to be performed by the second terminal on the second target interface;
third information, used to indicate a target object corresponding to the operation to be performed by the second terminal on the second target interface.

In some embodiments, the first target interface or the second target interface comprises any one or more of the following:
a Uu interface;
a sidelink interface.

In some embodiments, the target object comprises any one or more of the following:
a Uu interface bearer and/or a logical channel;
a sidelink interface bearer and/or a logical channel.

In some embodiments, the first processing unit is further configured to suspend or release the target object on the second target interface according to the second information and/or the third information.

In some embodiments, the apparatus further comprises:
a second receiving unit, configured to receive second indication information sent by the first terminal through the first interface.

In some embodiments, the second indication information comprises any one or more of the following:
fourth information, used to indicate RLF recovery success or RRC connection re-establishment success or RRC reconfiguration success;
an interface identifier for which the RLF recovery or the RRC connection reestablishment or the RRC reconfiguration is successfully performed;
a service identity of the service to be resumed for transmission;
fifth information, used to indicate information of an operation to be performed by the second terminal on the second target interface;
sixth information, used to indicate a target object corresponding to the operation to be performed by the second terminal on the second target interface.

In some embodiments, the first processing unit is further configured to resume data transmission of the target object on the second target interface according to the fourth information and/or the fifth information and/or the sixth information.

It should be noted that the apparatus provided in the embodiments of the present disclosure can implement all the method steps implemented in the foregoing method embodiments and can achieve the same technical effects. Therefore, the parts identical to the method embodiments and the beneficial effects thereof will not be further described herein.

It should be noted that the division of units in the embodiments of the present disclosure is illustrative and merely represents a logical functional division. In actual implementation, other division manners may be adopted. In addition, the functional units in the embodiments of the present disclosure may be integrated into one processing unit, or may exist physically as separate units, or two or more units may be integrated into one unit. The integrated unit may be implemented in the form of hardware or in the form of a software functional unit.

If the integrated unit is implemented in the form of a software functional unit and sold or used as an independent product, it may be stored in a processor-readable storage medium. Based on such understanding, the technical solutions of the present disclosure, in essence or at least the part contributing to the prior art, may be embodied in the form of a software product. The computer software product is stored in a storage medium and includes a plurality of instructions for enabling a computer apparatus (which may be a personal computer, a server, or a network apparatus, etc.) or a processor to execute all or part of the steps of the methods described in the embodiments of the present disclosure. The storage medium includes: a USB flash drive, a mobile hard disk, a read-only memory (ROM), a random access memory (RAM), a magnetic disk, an optical disk, or any other medium capable of storing program code.

The embodiments of the present disclosure further provide a communication apparatus, comprising: a memory, a processor, and a program stored in the memory and executable on the processor, wherein the processor executes the program to implement the steps of the information indication method described above.

The embodiments of the present disclosure further provide a processor-readable storage medium, on which a program is stored. When the program is executed by a processor, the program implements the processes of the information indication method described in the embodiments above and can achieve the same technical effects. To avoid repetition, details will not be repeated herein. The readable storage medium may be any available medium or data storage apparatus accessible by the processor, including but not limited to a magnetic storage apparatus (for example, a floppy disk, a hard disk, a magnetic tape, a magneto-optical disk (MO), etc.), an optical storage apparatus (for example, a compact disk (CD), a digital video disk (DVD), a Blu-ray disk (BD), a high-definition versatile disk (HVD), etc.), or a semiconductor memory (for example, a read-only memory (ROM), an erasable programmable read-only memory (EPROM), an electrically erasable programmable read-only memory (EEPROM), a non-volatile memory (NAND FLASH), a solid state disk (SSD)).

It should be noted that, in the present disclosure, the terms " comprise" , "include" , or any other variations thereof are intended to cover a non-exclusive inclusion, such that a process, method, article, or apparatus that comprises a series of elements not only comprises those elements but also comprises other elements that are not explicitly listed, or further comprises elements that are inherent to such process, method, article, or apparatus. Without further limitation, an element defined by the phrase "comprising one ···" does not exclude the presence of additional identical elements in the process, method, article, or apparatus that comprises the element.

Through the descriptions of the above embodiments, those skilled in the art can clearly understand that the method described in the above embodiments may be implemented by software in combination with a necessary general hardware platform, and certainly may also be implemented by hardware; however, in many cases, the former is a preferable manner. Based on this understanding, the technical solutions of the present disclosure, in essence or at least the part contributing to the related art, may be embodied in the form of a software product. The computer software product is stored in a storage medium (such as ROM/RAM, a magnetic disk, or an optical disk) and includes a plurality of instructions for enabling a terminal apparatus (which may be a mobile phone, a computer, a server, an air conditioner, or a network apparatus, etc.) to execute the methods described in the embodiments of the present disclosure.

It should be noted that it should be understood that the division of each module above is merely a logical functional division. In actual implementation, all or part of the modules may be integrated into one physical entity, or may be physically separated. The modules may all be implemented in the form of software invoked by a processing element, or may all be implemented in the form of hardware, or some modules may be implemented in software invoked by a processing element, while other modules may be implemented in hardware. For example, the determining module may be an independently provided processing element, or may be integrated into a chip of the above apparatus. In addition, it may also be stored in the memory of the above apparatus in the form of program code and invoked by a processing element of the apparatus to execute the functions of the determining module. Other modules may be implemented in a similar manner. Moreover, these modules may be integrated together in whole or in part or may be implemented independently. The processing element described herein may be an integrated circuit capable of processing signals. During implementation, each step of the above method or each module above may be completed through integrated logic circuits in the processor element in hardware or through software instructions.

For example, each module, unit, subunit, or submodule may be one or more integrated circuits configured to implement the above methods, such as: one or more application specific integrated circuits (ASICs), or one or more digital signal processors (DSPs), or one or more field-programmable gate arrays (FPGAs), etc. For example, when any module above is implemented in the form of program code scheduled by a processing element, the processing element may be a general-purpose processor, such as a central processing unit (CPU) or any other processor capable of invoking program code. For another example, these modules may be integrated together and implemented in the form of a system-on-a-chip (SOC).

The terms "first" , " second" , and the like in the specification and claims of the present disclosure are used to distinguish similar objects and do not necessarily describe a specific order or temporal sequence. It should be understood that, when appropriate, such data may be interchanged so that the embodiments of the present disclosure may be implemented in an order other than the one illustrated or described herein. In addition, the terms "comprise" and "have" and any variations thereof are intended to cover non-exclusive inclusion. For example, a process, method, system, product, or apparatus comprising a series of steps or units is not limited to those steps or units explicitly listed, but may also include other steps or units not explicitly listed or inherent to such process, method, product, or apparatus. Further, the use of "and/or" in the specification and claims indicates at least one of the connected objects. For example, A and/or B and/or C indicates seven possibilities: A alone, B alone, C alone, A and B together, B and C together, A and C together, and A, B, and C together. Similarly, the phrase "at least one of A and B" in the specification and claims should be understood as "A alone, B alone, or both A and B" .

The embodiments of the present disclosure have been described above with reference to the accompanying drawings, but the present disclosure is not limited to the foregoing specific embodiments. The foregoing specific embodiments are merely illustrative rather than limiting. Those of ordinary skill in the art, in light of the teachings of the present disclosure and without departing from the spirit of the present disclosure or the scope protected by the claims, may make various forms of modifications, all of which fall within the protection scope of the present disclosure.

## Claims

1. A method for indicating information, applied to a first terminal, comprising:
transmitting, through a first interface, first indication information to a second terminal in a case that a first event occurs on a first target interface;
wherein the first indication information is used to indicate suspending a target object or releasing the target object on a second target interface, the first interface being a sidelink interface between the first terminal and the second terminal, and the second terminal comprising one or more terminals having an association relationship with the first terminal.

2. The method according to claim 1, wherein the first event comprises at least one of the following:
a Radio Link Failure (RLF);
an RLF recovery failure;
an RRC connection reestablishment failure;
an RRC reconfiguration failure.

3. The method according to claim 1, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

4. The method according to claim 1, wherein the first target interface or the second target interface comprises at least one of the following:
a Uu interface;
a sidelink interface.

5. The method according to claim 1, wherein the target object comprises at least one of the following:
a Uu interface bearer and/or a logical channel;
a sidelink interface bearer and/or a logical channel.

6. The method according to claim 1, wherein the transmitting the first indication information to the second terminal through the first interface comprises:
transmitting the first indication information to the second terminal through the first interface in a case that the second terminal is determined to exist.

7. The method according to claim 1 or claim 6, further comprising:
determining the second terminal according to at least one of the following information:
first configuration information transmitted by a network apparatus;
second configuration information transmitted by a higher layer of the first terminal.

8. The method according to claim 7, wherein the first configuration information or the second configuration information comprises at least one of the following:
service identification information;
identification information of the second terminal;
a target Layer 2 (L2) identification of a sidelink interface associated with the service.

9. The method according to claim 1, further comprising:
transmitting, through the first interface, second indication information to the second terminal in a case that RLF recovery succeeds or RRC reconfiguration succeeds on the first target interface.

10. The method according to claim 9, wherein the second indication information comprises at least one of the following:
fourth information used to indicate successful RLF recovery or successful RRC connection reestablishment or successful RRC reconfiguration;
an identification of an interface on which the RLF recovery or the RRC connection reestablishment or the RRC reconfiguration is successfully performed;
a service identification to be restored for transmission;
fifth information used to indicate information of an operation to be performed by the second terminal on the second target interface;
sixth information used to indicate a target object corresponding to the operation to be performed by the second terminal on the second target interface.

11. The method according to claim 9 or claim 10, wherein the first indication information and/or the second indication information is transmitted by at least one of the following manners:
broadcast, multicast, unicast.

12. A method for indicating information, applied to a second terminal, comprising:
receiving, through a first interface, first indication information transmitted by a first terminal, wherein the first indication information is transmitted in a case that a first event occurs on a first target interface, and is used to indicate suspending a target object or releasing the target object on a second target interface, the first interface being a sidelink interface between the first terminal and the second terminal, and the second terminal comprising one or more terminals having an association relationship with the first terminal;
suspending the target object or releasing the target object on the second target interface according to the first indication information.

13. The method according to claim 12, wherein the first event comprises at least one of the following:
RLF;
RLF recovery failure;
RRC connection reestablishment failure;
RRC reconfiguration failure.

14. The method according to claim 12, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

15. The method according to claim 12, wherein the first target interface or the second target interface comprises at least one of the following:
a Uu interface;
a sidelink interface.

16. The method according to claim 12, wherein the target object comprises at least one of the following:
a Uu interface bearer and/or a logical channel;
a sidelink interface bearer and/or a logical channel.

17. The method according to claim 14, wherein suspending the target object or releasing the target object on the second target interface according to the first indication information comprises:
suspending or releasing the target object on the second target interface according to the second information and/or the third information.

18. The method according to claim 12, further comprising:
receiving, through the first interface, second indication information transmitted by the first terminal.

19. The method according to claim 18, wherein the second indication information comprises at least one of the following:
fourth information used to indicate successful RLF recovery or successful RRC connection reestablishment or successful RRC reconfiguration;
an interface identification of an interface on which the RLF recovery, the RRC connection reestablishment, or the RRC reconfiguration is successfully performed;
a service identification to be restored for transmission;
fifth information used to indicate information of an operation to be performed by the second terminal on the second target interface;
sixth information used to indicate a target object corresponding to the operation to be performed by the second terminal on the second target interface.

20. The method according to claim 19, further comprising:
restoring data transmission of the target object on the second target interface according to the fifth information and/or the sixth information.

21. An information indication apparatus, applied to a first terminal, comprising: a memory, a transceiver, and a processor,
wherein the memory is configured to store a computer program; the transceiver is configured to transmit and receive data under the control of the processor; and the processor is configured to read the computer program from the memory and perform the following operations:
transmitting, through a first interface, first indication information to a second terminal in a case that a first event occurs on a first target interface;
wherein the first indication information is used to indicate suspending a target object or releasing the target object on a second target interface, the first interface being a sidelink interface between the first terminal and the second terminal, and the second terminal comprising one or more terminals having an association relationship with the first terminal.

22. The apparatus according to claim 21, wherein the first event comprises at least one of the following:
RLF;
RLF recovery failure;
RRC connection reestablishment failure;
RRC reconfiguration failure.

23. The apparatus according to claim 21, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

24. The apparatus according to claim 21, wherein the first target interface or the second target interface comprises at least one of the following:
a Uu interface;
a sidelink interface.

25. The apparatus according to claim 21, wherein the target object comprises at least one of the following:
a Uu interface bearer and/or a logical channel;
a sidelink interface bearer and/or a logical channel.

26. The apparatus according to claim 21, wherein the processor is further configured to read the computer program from the memory and perform the following operation:
transmitting the first indication information to the second terminal through the first interface if the second terminal is determined to exist.

27. The apparatus according to claim 21 or 26, wherein the processor is further configured to read the computer program from the memory and perform the following operation:
determining the second terminal according to at least one of the following:
first configuration information transmitted by a network apparatus;
second configuration information transmitted by an upper layer of the first terminal.

28. The apparatus according to claim 27, wherein the first configuration information or the second configuration information comprises at least one of the following:
service identification information;
identification information of the second terminal;
a sidelink interface target L2 identification associated with the service.

29. The apparatus according to claim 28, wherein the processor is further configured to read the computer program from the memory and perform the following operation:
transmitting second indication information to the second terminal through the first interface if RLF recovery or RRC reconfiguration on the first target interface is successful.

30. The apparatus according to claim 29, wherein the second indication information comprises at least one of the following:
fourth information used to indicate successful RLF recovery or successful RRC connection reestablishment or successful RRC reconfiguration;
an identification of an interface on which the RLF recovery, the RRC connection reestablishment, or the RRC reconfiguration is successfully performed;
a service identification to be restored for transmission;
fifth information used to indicate information of an operation to be performed by the second terminal on the second target interface;
sixth information used to indicate a target object corresponding to the operation to be performed by the second terminal on the second target interface.

31. The apparatus according to claim 29, wherein the first indication information and/or the second indication information is transmitted by at least one of the following manners:
broadcast, multicast, unicast.

32. An information indication apparatus, applied to a second terminal, comprising: a memory, a transceiver, and a processor,
wherein the memory is configured to store a computer program; the transceiver is configured to transmit and receive data under the control of the processor; and the processor is configured to read the computer program from the memory and perform the following operations:
receiving, through a first interface, first indication information transmitted by a first terminal, wherein the first indication information is transmitted in a case that a first event occurs on a first target interface and is used to indicate suspending a target object or releasing the target object on a second target interface, the first interface being a sidelink interface between the first terminal and the second terminal, and the second terminal comprising one or more terminals having an association relationship with the first terminal;
suspending the target object or releasing the target object on the second target interface according to the first indication information.

33. The apparatus according to claim 32, wherein the first event comprises at least one of the following:
RLF;
RLF recovery failure;
RRC connection reestablishment failure;
RRC reconfiguration failure.

34. The apparatus according to claim 32, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

35. The apparatus according to claim 32, wherein the first target interface or the second target interface comprises at least one of the following:
a Uu interface;
a sidelink interface.

36. The apparatus according to claim 32, wherein the target object comprises at least one of the following:
a Uu interface bearer and/or a logical channel;
a sidelink interface bearer and/or a logical channel.

37. The apparatus according to claim 34, wherein the processor is further configured to read the computer program from the memory and perform the following operation:
suspending or releasing the target object on the second target interface according to the second information and/or the third information.

38. The apparatus according to claim 32, wherein the processor is further configured to read the computer program from the memory and perform the following operation:
receiving second indication information transmitted by the first terminal through the first interface.

39. The apparatus according to claim 38, wherein the second indication information comprises at least one of the following:
fourth information used to indicate successful RLF recovery or successful RRC connection reestablishment or successful RRC reconfiguration;
an interface identification of an interface on which the RLF recovery, the RRC connection reestablishment, or the RRC reconfiguration is successfully performed;
a service identification to be restored for transmission;
fifth information used to indicate information of an operation to be performed by the second terminal on the second target interface;
sixth information used to indicate a target object corresponding to the operation to be performed by the second terminal on the second target interface.

40. The apparatus according to claim 39, wherein the processor is further configured to read the computer program from the memory and perform the following operation:
restoring data transmission of the target object on the second target interface according to the fifth information and/or the sixth information.

41. An information indication apparatus applied to a first terminal, comprising:
a first transmission unit configured to transmit first indication information to a second terminal through a first interface when a first event occurs on a first target interface;
wherein the first indication information is configured to indicate suspending a target object or releasing the target object on a second target interface, the first interface is a sidelink interface between the first terminal and the second terminal, and the second terminal comprises one or more terminals having an association relationship with the first terminal.

42. The apparatus according to claim 41, wherein the first event comprises at least one of the following:
RLF;
RLF recovery failure;
RRC connection reestablishment failure;
RRC reconfiguration failure.

43. The apparatus according to claim 41, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

44. The apparatus according to claim 43, wherein the first target interface or the second target interface comprises at least one of the following:
a Uu interface;
a sidelink interface.

45. The apparatus according to claim 43, wherein the target object comprises at least one of the following:
a Uu interface bearer and/or a logical channel;
a sidelink interface bearer and/or a logical channel.

46. The apparatus according to claim 41, wherein the first transmission unit is further configured to transmit the first indication information to the second terminal through the first interface when it is determined that the second terminal exists.

47. The apparatus according to claim 41, wherein the apparatus further comprises:
a first processing unit configured to determine the second terminal according to at least one of the following:
first configuration information transmitted by a network apparatus;
second configuration information transmitted by a higher layer of the first terminal.

48. The apparatus according to claim 47, wherein the first configuration information or the second configuration information comprises at least one of the following:
service identification information;
identification information of the second terminal;
a sidelink interface target L2 identifier associated with the service.

49. The apparatus according to claim 48, wherein the apparatus further comprises:
a second transmission unit configured to transmit second indication information to the second terminal through the first interface when RLF recovery or RRC reconfiguration is successful on the first target interface.

50. The apparatus according to claim 49, wherein the second indication information comprises at least one of the following:
fourth information used to indicate successful RLF recovery or successful RRC connection reestablishment or successful RRC reconfiguration;
an interface identification of an interface on which the RLF recovery, the RRC connection reestablishment, or the RRC reconfiguration is successfully performed;
a service identification to be restored for transmission;
fifth information used to indicate information of an operation to be performed by the second terminal on the second target interface;
sixth information used to indicate a target object corresponding to the operation to be performed by the second terminal on the second target interface.

51. The apparatus according to claim 49, wherein the first indication information and/or the second indication information is transmitted through at least one of the following manners:
broadcast;
multicast;
unicast.

52. An information indication apparatus applied to a second terminal, comprising:
a first receiving unit configured to receive first indication information transmitted by a first terminal through a first interface, wherein the first indication information is transmitted when a first event occurs on a first target interface and is configured to indicate suspending a target object or releasing the target object on a second target interface, the first interface is a sidelink interface between the first terminal and the second terminal, and the second terminal comprises one or more terminals having an association relationship with the first terminal; and
a first processing unit configured to suspend the target object or release the target object on the second target interface according to the first indication information.

53. The apparatus according to claim 52, wherein the first event comprises at least one of the following:
RLF;
RLF recovery failure;
RRC connection reestablishment failure;
RRC reconfiguration failure.

54. The apparatus according to claim 52, wherein the first indication information comprises at least one of the following:
first information used to indicate the first event;
a first target interface corresponding to the first event;
service identification information;
second information used to indicate information of an operation to be performed by the second terminal on the second target interface;
third information used to indicate a target object corresponding to the operation to be performed by the second terminal on the second target interface.

55. The apparatus according to claim 52, wherein the first target interface or the second target interface comprises at least one of the following:
a Uu interface;
a sidelink interface.

56. The apparatus according to claim 52, wherein the target object comprises at least one of the following:
a Uu interface bearer and/or a logical channel;
a sidelink interface bearer and/or a logical channel.

57. The apparatus according to claim 54, wherein the first processing unit is further configured to suspend or release the target object on the second target interface according to the second information and/or the third information.

58. The apparatus according to claim 52, wherein the apparatus further comprises:
a second receiving unit configured to receive second indication information transmitted by the first terminal through the first interface.

59. The apparatus according to claim 58, wherein the second indication information comprises at least one of the following:
fourth information used to indicate that RLF recovery is successful or RRC connection reestablishment is successful or RRC reconfiguration is successful;
an interface identifier of an interface on which RLF recovery or RRC connection reestablishment or RRC reconfiguration is successfully performed;
a service identifier of a service to be restored for transmission;
fifth information used to indicate information of an operation to be performed by the second terminal on the second target interface;
sixth information used to indicate a target object corresponding to the operation to be performed by the second terminal on the second target interface.

60. The apparatus according to claim 59, wherein the first processing unit is further configured to restore data transmission of the target object on the second target interface according to the fourth information and/or the fifth information and/or the sixth information.

61. A processor-readable storage medium storing a computer program, wherein the computer program is configured to cause a processor to execute the method according to any one of claims 1 to 20.
